# EUROPEAN PATENT APPLICATION

(11) **EP 2 565 448 A1**
(43) Date of publication of application: **06.03.2013**
(21) Application number: 12181076.6
(22) Date of filing: 20.08.2012
(51) Int. Cl.: F03D 11/00, F03D 11/04

(54) **A wind turbine**

(30) Priority: 23.08.2011 US 201113215954
(71) Applicant: General Electric Company, Schenectady, New York 12345 (US)
(72) Inventor: Scholte-Wassink, Hartmut Andreas, 49828 Lage (DE)
(74) Representative: Bedford, Grant Richard

(57) **Abstract**

A wind turbine (210, 310, 410, 510) is provided. The wind turbine (210, 310, 410, 510) includes at least one unit to be cooled (21, 42, 46), a tower (12, 121), an anchor structure (70, 78, 79) arranged at a lower end of the tower (12, 121), and a heat exchanger (51, 52). The anchor structure (70, 78, 79) is at least partially filled with a liquid (30). The heat exchanger (51, 52) is configured to cool the at least one unit (21, 42, 46) using the liquid (30) as a coolant.

## Description

The subject matter described herein relates generally to wind turbines, and, more particularly, to offshore wind turbines having a heat exchanger for removing excess heat.

At least some known wind turbines include a tower and a nacelle mounted on the tower. A rotor is rotatably mounted to the nacelle and is coupled to a generator by a shaft. A plurality of rotor blades extend from the rotor. The blades are oriented such that wind passing over the blades turns the rotor and rotates the shaft, thereby driving the generator to generate electricity.

In the past, wind turbines have often be installed onshore allowing for well-known construction methods and also easy accessibility and maintenance. However, availability of onshore sites becomes rare in some countries. Furthermore, environmental impacts of onshore wind turbines on residents living near the turbine site impose, e.g., size limitations onto onshore turbines. For these and other reasons, offshore wind turbine sites, i.e. sites which are located in a body of water, are attracting more and more interest during recent years.

Although modem wind turbines often become more and more efficient in converting the rotation of the rotor to electric power, the process will always result in some of the energy being converted to heat in some of the wind turbine components.

This excess heat is typically to be removed from the components to protect the components and ensure proper functioning. Traditionally, this is achieved by means of one or more cooling systems, which by means of a cooling medium can transport the heat from the components to a radiator, which can give off the heat to the air outside the wind turbine and/or by creating an air flow from the outside of the wind turbine which passes the component or an internal heat exchanger.

However, the quality of the outside air is difficult to control both in temperature, humidity, and purity. Furthermore, modem offshore wind turbines get bigger and bigger in power output and thereby often also in production of excess heat. Since air is a relatively poor conductor of heat, these types of cooling systems tend to be large, expensive and heavy.

Alternatively, seawater may be used to cool components of offshore wind turbines. However, if such a cooling system is open there are typically serious issues regarding ice, clogging, and/or corrosion, and if the cooling system is closed, for example by circulating a cooling medium through a hose placed in the seawater, there is ice, storm, overgrowing and other issues to be solved.

Accordingly, there is ongoing need to improve the cooling systems of offshore wind turbines.

In one aspect according to the present invention, a wind turbine is provided. The wind turbine includes at least one unit to be cooled, a tower, an anchor structure arranged at a lower end of the tower, and a heat exchanger. The anchor structure is at least partially filled with a liquid. The heat exchanger is configured to cool the at least one unit using the liquid as a coolant.

In another aspect, an offshore wind turbine is provided. The offshore wind turbine includes a foundation having a pile mounted in an underwater ground. The pile has a portion above the underwater ground which is at least partially filled with a coolant. At least one heat generating unit is arranged above the pile. The offshore wind turbine further includes a cooling system which is configured to cool the at least one heat generating unit utilizing the coolant.

In yet another aspect, an offshore wind turbine is provided. The offshore wind turbine includes a floating unit which is anchored to an underwater ground, and a wind turbine mounted on the floating unit. The wind turbine includes at least one heat generating unit, and a cooling system configured to cool the at least one heat generating unit utilizing the coolant.

Various aspects, advantages and features of the present invention are apparent from the dependent claims, the description and the accompanying drawings.
Figure 1 is a perspective view of an exemplary offshore wind turbine;
Figure 2 is a schematic view of an offshore wind turbine according to an embodiment;
Figure 3 is a schematic view of an offshore wind turbine according to another embodiment;
Figure 4 is a schematic view of an offshore wind turbine according to still another embodiment;
Figure 5 is a schematic view of a floating offshore wind turbine according an embodiment;
Figure 6 is a schematic view of a floating offshore wind turbine according to another embodiment;
Figure 7 is a schematic view of cooling system of an offshore wind turbine according to an embodiment;
Figure 8 is a schematic view of cooling system of an offshore wind turbine according to another embodiment;
Figure 9 is a schematic view of cooling system of an offshore wind turbine according to still another embodiment 6; and
Figure 10 is a flow diagram of a method according to an embodiment.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include a wind turbine system that may be erected offshore or nearshore and includes a cooling system. More specifically, the cooling system according to embodiments described herein includes an internal coolant reservoir arranged inside an anchor structure of the wind turbine. In doing so, an offshore wind turbine system with a reliable closed cooling system is provided.

As used herein, the term "offshore" is intended to be representative of a location within a body of water, e.g. a lake, a river or the sea. As used herein, the term "water" is intended to be representative of salt water, fresh water or a mixture of both as well as of running water and standing water. As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the terms "floating offshore wind turbine" refer to an offshore wind turbine mounted on a floating structure. As used herein, the term "wind generator" is intended to be representative of any wind turbine that generates electrical power from rotational energy generated from wind energy, and more specifically, converts mechanical energy converted from kinetic energy of wind to electrical power. As used herein, the term "anchor structure" is intended to be representative of any support system for supporting a wind turbine in a body of water. As used herein, the term "anchor structure" shall embrace fixed foundations mounted in an underwater ground such as a mono-pile foundation, which may also be referred to as monopole foundation, and multipole foundation as well as floating units anchored to the underwater ground such as floating platforms and boys. As used herein, the term "lower end of a tower" is intended to be representative of an end of the wind turbine tower that is arranged opposite to a wind turbine nacelle. The lower end of the tower may be arranged close to and even in contact with the body of water.

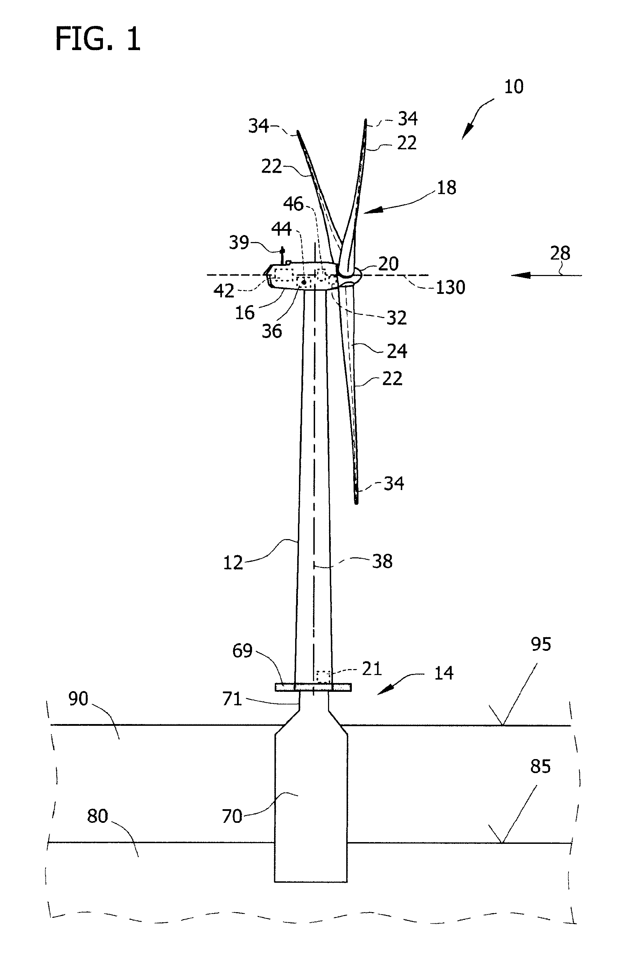

Figure 1 is a perspective view of an exemplary offshore wind turbine 10. In the exemplary embodiment, offshore wind turbine 10 is a horizontal-axis wind turbine. Alternatively, offshore wind turbine 10 may be a vertical-axis wind turbine. In the exemplary embodiment, offshore wind turbine 10 includes a tower 12 that extends from an anchor structure 14, a nacelle 16 mounted on tower 12, and a rotor 18 that is coupled to nacelle 16.

In the exemplary embodiment, anchor structure 14 is formed as a mono pile foundation. The mono pile foundation 14 includes a pile 70 such as a steel pile, which is typically formed as a hollow tube with an outer diameter in a range between about 1 m to about 10 m, more typically between about 3 and about 8 m, and even more typically between about 3.5 and about 4.5 m. The pile 70 extends from an underwater ground 80 and through a body of water 90, for example the sea. Furthermore, pile 70 is mounted in, for example driven into, underwater ground 80, for example a seabed, to a certain depth. How deep pile 70 is placed below a surface 85 of underwater ground 80, among other things, depends on the type of underground but typically ranges from about 10 meters and to about 20 meters. In the exemplary embodiment, pile 70 is formed in an upper portion 71 extending above water level 95 as a plinth onto which tower 12 and an optional platform 69 is mounted.

Rotor 18 includes a rotatable hub 20 and at least one rotor blade 22, for example three rotor blades 22, coupled to and extending outward from hub 20. More specifically, hub 20 is rotatably coupled to electric generator 42 positioned by a rotor shaft (sometimes referred to as either a main shaft or a low speed shaft, not illustrated in Figure 1), a gearbox 46, a high speed shaft, and a coupling (both not illustrated in Figure 1). Rotation of the rotor shaft rotatably drives gearbox 46 that subsequently drives the high speed shaft. The high speed shaft rotatably drives generator 42 with the coupling and rotation of the high speed shaft facilitates production of electrical power by generator 42. The generator 42 is typically coupled via a power conversion assembly 21 and an underwater power cable (not shown in Figure 1) to a grid. The power conversion assembly 21 may include an inverter and/or a transformer. In the exemplary embodiment, power conversion assembly 22 is arranged on platform 69 and inside tower 12. In other embodiments, at least a part of power conversion assembly 22, for example an inverter, is arranged in nacelle 16. In still other embodiments, at least a part of power conversion assembly 22, for example a transformer, is arranged on platform 69 but outside tower 12.

In one embodiment, rotor blades 22 have a length ranging from about 15 meters (m) to about 90 m. Alternatively, rotor blades 22 may have any suitable length that enables wind turbine 10 to function as described herein. For example, other nonlimiting examples of blade lengths include 10 m or less, 20 m, 37 m, or a length that is greater than 90 m. The exemplary embodiment of Figure 1 illustrates an upwind wind turbine 10 in which the rotor 18 faces the wind. The rotor 18 may, however, also be arranged downwind, i.e. on the lee side of tower 12. As wind strikes rotor blades 22 from a direction 28, rotor 18 is rotated about an axis of rotation 130. Further, in the exemplary embodiment, as direction 28 changes, a yaw direction of nacelle 16 may be controlled about a yaw axis 38 to position rotor blades 22 with respect to direction 28.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18. In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16. However, control system 36 may be a distributed system throughout wind turbine 10, on or in the floating platform 69, within a floating wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

In order to deliver the required electrical output power in accordance to external request and stably under variable wind conditions a control system is required. Usually, the control system 36 can operate as a central control system which controls wind turbine 10 via special hardware components, such as for example a Single-Point-Operational status (SPS) controller and bus connections such as an Ethernet LAN, a Controller Area Network (CAN) bus, a FlexRay bus or the like. Typically, control system 36 operates as primary controller which supervises at least a part of the functions of the wind turbine 10. This may include controlling of other controllers of the wind turbine 10, communication with other wind turbines and/or a wind farm management system as well as error handling and operational optimization. Further, a SCADA (Supervisory, Control and Data Acquisition) program may be executed on the hardware of control system 36. Control system 36 typically receives information from sensors and other components of the wind turbine 10 such as the generator 42, load sensors of the rotor blades 22 and an anemometer 39 arranged on nacelle 16.

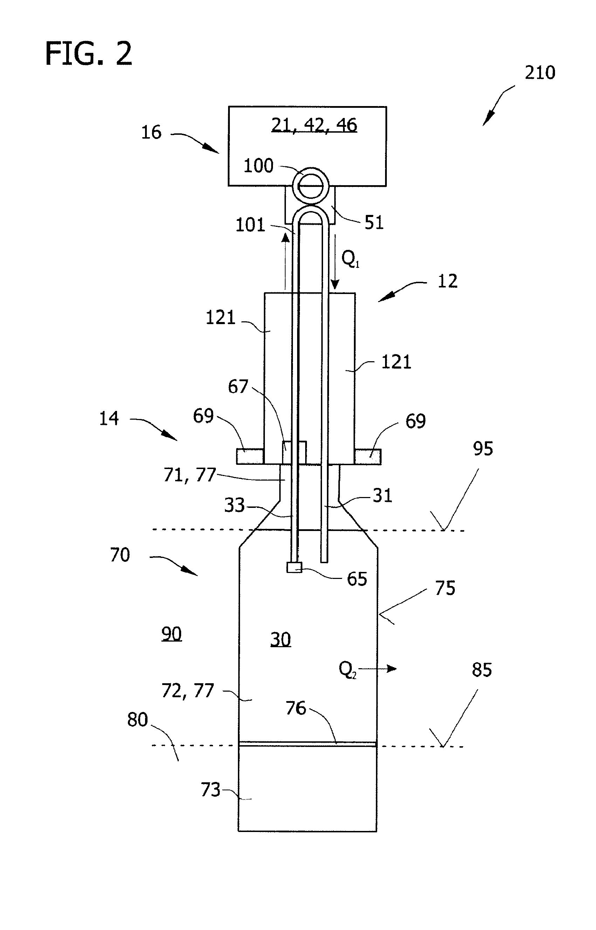

Figure 2 is a schematic view of an offshore wind turbine 210. Similar as explained with reference to Figure 1, offshore wind turbine 210 is also of the fixed foundation type. More specifically, offshore wind turbine 210 includes a tower 12 mounted to an anchor structure 14 formed as a mono pile foundation. For sake of clarity, only a lowermost tower section 121 of tower 12 is illustrated in Figure 2. A nacelle 16 is typically mounted to an uppermost tower section (not shown in Figure 2). Nacelle 16 typically includes one or more heat generating units 21, 42, 46 which, at least during normal operation of offshore wind turbine 210, generate excess heat that is at least from time to time to be removed to ensure save operation. In the following, the heat generating units 21, 42, 44 are therefore also referred to as units to be cooled. Examples include a generator 42, a gearbox 46, and a power conversion assembly 21, for example an inverter and/or a transformer. Furthermore, electrical consumers such as a control system and a cabinet may form respective units to be cooled. In other embodiments, a part of the heat generating units, for example a large transformer of power conversion assembly 21 is arranged in tower base section 121 and/or on platform 69.

In the exemplary embodiment, anchor structure 14 includes a pile 70 formed as a hollow tube. An upper portion 71 of pile 70 extends above a body of water 90. Typically, upper portion 71 is formed as a plinth to facilitate mounting a lower end of tower section 121 and tower 12, respectively, and an optional platform 69 to pile 70.

A lower portion 73 of pile 70 is arranged in an underwater ground 80. Typically, pile 70 is driven into underwater ground 80. Lower portion 73 of pile 70 may be filled with sand, rocks, clastic rock, and/or concrete. In doing so, anchorage of pile 70 in underwater ground 80 is facilitated. A middle portion 72 of pile 70 forms a transition piece between lower portion 73 and upper portion 71. The middle portion 72 extends through the body of water 90.

In the exemplary embodiment, middle portion 72 and upper portion 71 of pile 70 form a cylindrical cavity 77 which is partially filled with a liquid 30. Accordingly, a reservoir of liquid 30, which is in the following also referee to as liquid reservoir, is formed within pile 70 and anchor structure 14, respectively. For example, middle portion 72 is filled with liquid 30 substantially to an average level 95 of the body of water 90. It goes without saying that an upper level of liquid 30 may also be above or below average level 95.

According to an embodiment, liquid 30 of liquid reservoir is used as a coolant of a cooling system of offshore wind turbine 210. Typically, the cooling system includes a heat exchanger 51 which is thermally coupled to at least one of the heat generating units 21, 42, 46 and uses the liquid 30 as a coolant. Accordingly, a major portion, for example more than 80%, more typically more than 90%, of the excess heat generated by the respective heat generating unit 21, 42, 46 may be removed therefrom via an internal cooling cycle 100 and transferred as a excess heat quantity Q₁ to the liquid reservoir within anchor structure 14. The liquid reservoir is typically thermally coupled through an outer wall of pile 70 with the body of water 90. Accordingly, at least a major portion Q₂, typically more than about 90%, of the excess heat quantity Q₁ is typically transferred from the liquid reservoir through the outer wall to the body of water 90 adjoining an outer surface 75 of the outer wall. In doing so, the cooling system is configured to distribute at least a major portion of the excess heat of at least one heat generating unit 21, 42, 46 through the wall of pile 70. Accordingly, an efficient closed cooling system is provided for offshore wind turbine 210 which avoids the above discussed problems of ice, storm, and overgrowing.

The volume of the liquid reservoir, i.e. of liquid 30 in the anchor structure 14, is typically comparatively large, for example larger than about 5 m³, more typically larger than about 10 m³, even more typically larger than about 50 m³. Accordingly, even high peak values of excess heat quantities may temporarily be stored in the liquid reservoir. The area of outer surface 75 which is in contact with the body of water 90 is comparatively large, for example several ten m². Accordingly, higher temperature gradient between the liquid reservoir and the body of water 90, which may result from a thermal peak load, is typically sufficiently fast reduced.

Liquid 30 typically includes seawater and/or fresh water. Water is a good conductor of heat and has a high specific heat capacitance. Furthermore, at least a major part of liquid 30 may be obtained from the water of the surrounding body of water 90 which is easily available. Accordingly, cost may be saved. If liquid 30 is an aqueous solution, additives such as an antifreeze, for example glycol, may be added. In other embodiments, liquid 30 is an oil. To reduce the required volume, the oil may be stored in a sub-reservoir embedded in the water filled middle portion of pile 70.

Pile 70 is typically made of stainless steal. This ensures high enough mechanical stability, good thermal coupling between coolant 30 and the body of water 90, and sufficient corrosion resistance. In particular if seawater is used as a major constituent of liquid 30, an anticorrosive coating on an inner surface of pile 70 may be provided.

In the exemplary embodiment, heat exchanger 51 is configured to directly exchange the excess heat between inner cooling cycle 100 of the heat generating unit 21, 42, 46 and the liquid 30. For this purpose, heat exchanger 51 is configured to transfer heat between inner cooling cycle 100 and an outer cooling cycle 101 using liquid 30 as coolant. The outer cooling cycle 101 includes a tube 33 for transporting liquid 30 from the liquid reservoir to heat exchanger 51 and a tube 31 for transporting liquid 30 from heat exchanger 51 to the liquid reservoir. Typically, a pump 67 is used to pump liquid 30 through tubes 31, 33 and heat exchanger 51, respectively.

The heat exchanger 51 may be a liquid-to-liquid heat exchanger or an air-to-liquid heat exchanger. For example, heat exchanger 51 may be a heat exchanger of generator 42 having an inner air cooling cycle 100 or a heat exchanger for cooling an inner oil cooling cycle 100 of the gearbox 42. Accordingly, heat exchanger 51 may be an air-to-water heat exchanger and an oil-to-water heat exchanger, respectively.

It goes without saying that for each of the heat generating units 21, 42, 46 a respective heat exchanger 51 may be used. The respective heat exchanger 51 is typically arranged close to, for example in nacelle 16, but may also arranged remote to the corresponding heat generating unit 21, 42, 46. Even if several heat exchangers 51 are used, one pump 67 is typically sufficient to pump liquid 30 through branching tubes 31, 33. In addition, valves may be used to restrict and/or close flow branches of coolant.

According to an embodiment, a separating wall 76 is formed between lower portion 73 and middle portion 72 of pile 70. Accordingly, contaminating of liquid 30 is avoided.

Furthermore, an optional filter 65 may be coupled to tube 33 for removing debris such as sand and/or particular biological material from the liquid 30. In addition, pump 67 may be a reverse pump to facilitate cleaning of filter 65.

According to another embodiment, a multi-pile offshore wind turbine, for example a three-pole or three-pile offshore wind turbine, having an anchor structure with an internal liquid reservoir is provided. In these embodiments, the anchor structure connects tower 12 and underwater ground 80, for example the sea bed, via several piles, for example three piles typically arranged in an equilateral triangle manner. The liquid reservoir for the coolant may be arranged in one of the piles or distributed between them.

According to another embodiment, a similar wind turbine as shown in Figure 2 may be installed onshore. In this embodiment, a liquid reservoir for the coolant is provided in the foundation of the wind turbine tower forming the anchor structure. The liquid reservoir may be filled with water as coolant provided by an additional water supply or pumped with additional pumps from a nearby waters such as a lake or river to the foundation. Cooling of the liquid reservoir may be achieved by heat conduction through the foundation and/or by exchanging at least a part of the water with fresh water from the water supply or the nearby waters.

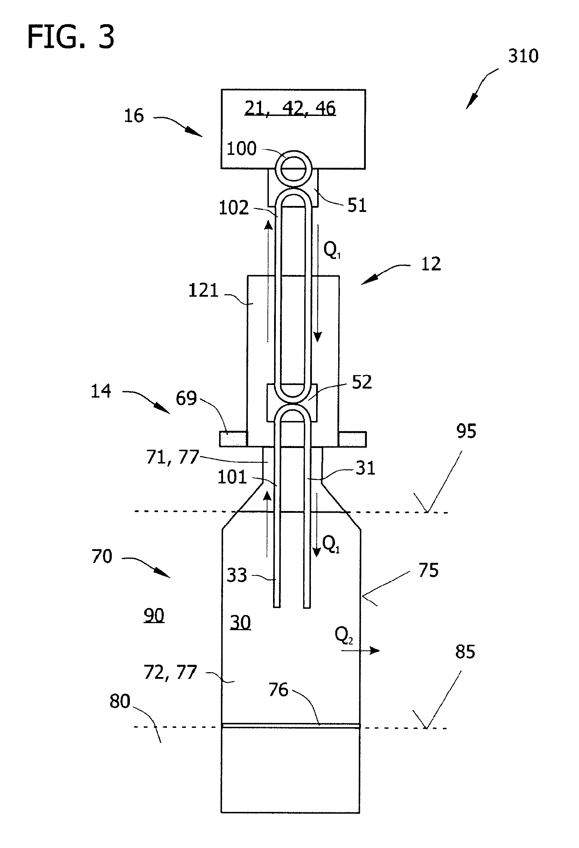

Next, an embodiment is described with reference to Fig. 3. Offshore wind turbine 310 shown in Figure 3 is very similar to the exemplary embodiment described above with regard to Figure 2. However, offshore wind turbine 310 includes one or several primary heat exchangers 51 which are configured to directly cool the respective heat generating units 21, 42, 46 and a secondary heat exchanger 52. The secondary heat exchanger 52 uses liquid 30 as coolant to exchange heat with a common cooling cycle 102 shared with the primary heat exchanger 51. Accordingly, the cooling system of offshore wind turbine 310 is also configured to distribute at least a major portion of the excess heat through the outer wall of anchor structure 14. For sake of clarity, additional pumps used for pumping the coolants are not illustrated in Figure 3.

Typically, only one secondary heat exchanger 52 is used to remove excess heat from different primary heat exchangers 51. In doing so, the cooling cycles for the heat generating units 21, 42, 46 are separated. Accordingly, safety may be improved.

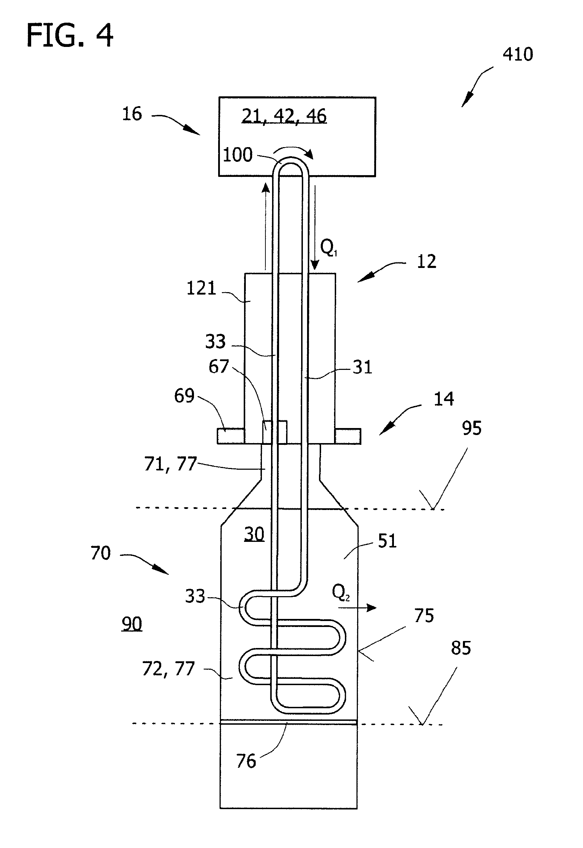

Figure 4 is a schematic view of an offshore wind turbine 410. Offshore wind turbine 410 shown in Figure 4 is also similar to the exemplary embodiments described above with regard to Figure 2. However, the heat exchanger 51 of offshore wind turbine 410 is formed by and within, respectively, the middle portion 72 of pile 70.

In the exemplary embodiment, the inner closed cooling cycle 100 directly transfers an excess heat quantity Q₁ from at least one of the heat generating units 21, 42, 46 to liquid 30 in the liquid reservoir. As explained with reference to Figure 2, the excess heat quantity Q₁ may be temporarily stored in the liquid reservoir and at least a major portion Q₂ of excess heat quantity Q₁ is transferred through an outer wall of the pile 70 to the body of water 90. Typically, major portion Q₂ and excess heat quantity Q₁ substantially match on time average.

To achieve high cooling efficiency, closed inner cooling cycle 100 may be formed in a lower portion arranged in the liquid reservoir as cooling coil. Alternatively and/or in addition, the lower portion of closed inner cooling cycle 100 may include surface enlarging structures.

Typically, oil is used as coolant circulating through closed inner cooling cycle 100. This allows for direct cooling of a generator 42, a gearbox 46 and/or a power conversion assembly 21. Typically, separate closed cooling cycles 100 are used for the different heat generating units 21, 42, 46.

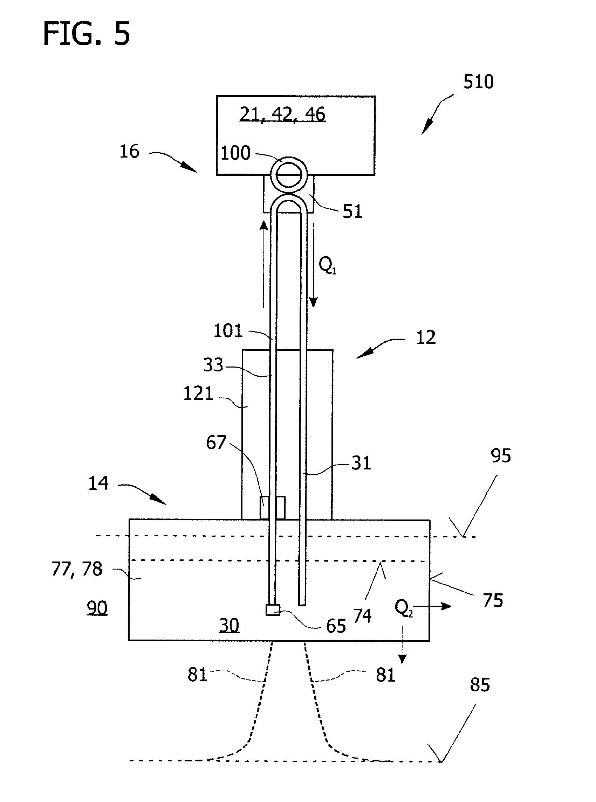

Figure 5 is a schematic view of a floating offshore wind turbine 510. Floating offshore wind turbine 510 shown in Figure 5 is also similar to the exemplary embodiments described above with regard to Figure 2. However, the anchorage structure 14 of floating offshore wind turbine 510 includes a floating unit 78 formed as a floating platform to which tower 12 is mounted. Platform 78 floats in the body of water 90, typically in a sea or in a lake or a river. As illustrate by the reference numeral 81 platform 78 is anchored, typically by anchoring ropes, cables, or chains, to underwater ground 85 to limit the freedom of movement of the floating offshore wind turbine 510.

Floating platform 78 may, for example, be a box-shaped or a disc-shaped tank with a large horizontal extension and a relatively short vertical extension. In other embodiments, floating platform 78 is of the spar-buoy type. Spar-buoys consist of a single long cylindrical tank and achieve stability by moving the center of mass as low as possible. In still other embodiments, floating platform 78 is a more complex structure and includes three or more buoyant columns to support the wind turbine.

Floating platform 78 provides the lifting force for carrying the other components of wind turbine 510. Accordingly, floating platform 78 is typically partially filled with a liquid 30 up to a level 74 below surface 95 of a surrounding body of water 90.

According to an embodiment, liquid 30 stored within floating platform 78 is used as a coolant of a cooling system of offshore wind turbine 510 to cool at least one heat generating unit 21, 42, 46. In the exemplary embodiment, the cooling system is very similar to the cooling system explained with reference to Figure 2. However, the liquid reservoir is arranged inside floating platform 78 instead of a pile. The cooling system of wind turbine 510 is configured to distribute a major portion of an excess heat of the at least one heat generating unit 21, 42, 46 through an outer wall of the floating unit 78 by heat conduction.

It goes without saying that the embodiments regarding the cooling system explained with reference to Figures 2 to 4, for example the different arrangements of heat exchangers, may also be used for offshore wind turbine 510.

Typically, floating platform 78 is floodable to adjust lifting force. Accordingly, at least a main component of liquid 30 is water of the body of water 90.

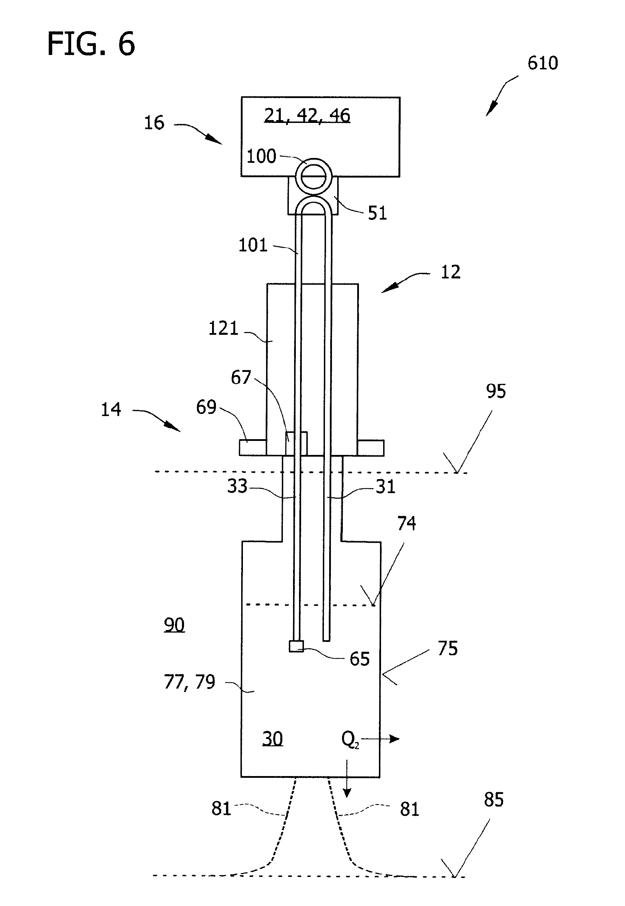

Figure 6 is a schematic view of a floating offshore wind turbine 610. Floating offshore wind turbine 610 shown in Figure 6 is very similar to the exemplary embodiments described above with regard to Figure 5. However, the anchorage structure 14 of floating offshore wind turbine 610 includes as a floating unit a buoy 79 to which tower 12 is mounted and which is anchored to the underwater ground instead of a floating platform. In a cavity 77 of buoy 79 a typically large reservoir is formed for liquid 30 forming a coolant of a cooling system. According to an embodiment, the cooling system is configured to remove at least a major part of excess heat from respective heat generating units 21, 42, 46.

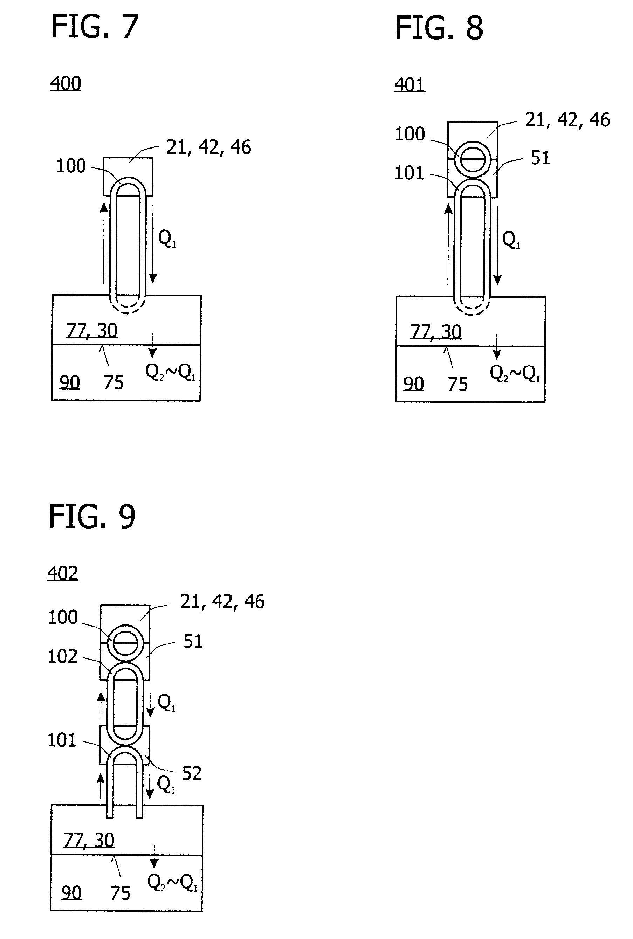

Next, embodiments referring to cooling systems for offshore wind turbines are described with reference to Figures 7 to 9. The cooling systems may be used in any of the above described offshore wind turbines.

Figure 7 is a schematic view of cooling system 400. In the exemplary embodiment, cooling system includes an inner cooling cycle 100 coupled to a heat generating unit 21, 42, 46 of an offshore wind turbine and an internal reservoir of a coolant 30. The internal reservoir may by formed by a cavity 77 within an anchor structure of the offshore wind turbine. Coolant 30 in the reservoir is typically separated from a body of water 90 by an outer wall of the offshore wind turbine. The outer wall is represented in Figure 7 by an outer surface 75 of the offshore wind turbine. The outer wall may, for example, be a sidewall of a hollow pile or a wall of a floating platform or a buoy. Cooling system 400 is configured to transfer a major portion, for example more than 80%, more typically more than 90%, of an excess heat produced by at least one of the heat generating units 21, 42, 46 through the outer wall.

Inner cooling cycle 100 may directly use coolant 30 to cool the heat generating unit 21, 42, 46. Alternatively, inner cooling cycle 100 is a closed one that exchanges heat with the coolant 30 in the internal reservoir, as explained in more detail above with reference to Figure 4.

Figure 8 is a schematic view of cooling system 401 for an offshore wind turbine. Cooling system 401 shown in Figure 8 is very similar to the exemplary embodiment described above with regard to Figure 7. However, cooling system 401 includes a primary heat exchanger 51 to exchange heat between the inner cooling cycle 100 and an outer cooling cycle 101 which uses coolant 30. Such a cooling system is explained in more detail above with reference to Figures 2, 5, 6.

Figure 9 is a schematic view of cooling system 402 for an offshore wind turbine. Cooling system 402 shown in Figure 9 is very similar to the exemplary embodiment described above with regard to Figure 7. However, cooling system 401 includes a primary heat exchanger 51 and a secondary heat exchanger 52. The primary heat exchanger 51 is configured to exchange heat between the inner cooling cycle 100 and a middle cooling cycle 102. The secondary heat exchanger 52 is configured to exchange heat between the middle cooling cycle 102 and the outer cooling cycle 101 which uses coolant 30. Such a cooling system is explained in more detail above with reference to Figure 3.

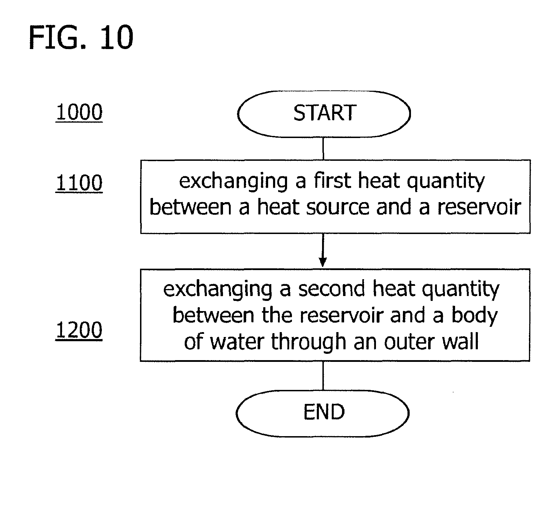

Figure 10 is a flow diagram of a method 1000 for cooling an offshore wind turbine. In a first block 1100 a first heat quantity is exchanged between a heat generating unit of the offshore wind turbine and an internal coolant reservoir. The internal coolant reservoir is typically arranged in an anchor structure of the offshore wind turbine. In a block 1200, a second heat quantity is exchanged between the internal coolant reservoir and a body of water is exchanged through an outer wall of the offshore wind turbine by heat conduction. Accordingly, a simple a reliable method for cooling offshore wind turbines is provided. On average the first and second heat quantities substantially matches.

The above-described offshore wind turbines include a closed cooling system that facilitates save cooling of heat generating units such as the generator and a gearbox in a simple and cost-efficient manner.

Exemplary embodiments of offshore wind turbines and methods for their operation are described above in detail. The systems and methods are not limited to the specific embodiments described herein, but rather, components of the systems and/or steps of the methods may be utilized independently and separately from other components and/or steps described herein. The embodiments are not limited to practice with respect to wind turbines and wind farms installed in the sea. Rather, the exemplary embodiment can be implemented and utilized in connection with many other applications of offshore wind turbines. For example, wind farms installed in a fjord, a river or a lake may use the offshore wind turbines and the methods disclosed herein. Furthermore, the exemplary embodiment can be implemented and utilized in connection with applications of onshore wind turbines.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A wind turbine, comprising:
   at least one unit to be cooled;
   a tower;
   an anchor structure arranged at a lower end of the tower, the anchor structure being at least partially filled with a liquid; and
   a heat exchanger configured to cool the at least one unit using the liquid as a coolant.
2. The wind turbine of clause 1, wherein the anchor structure comprises an outer wall, and wherein the liquid adjoins the outer wall.
3. The wind turbine of any preceding clause, wherein the anchor structure comprises a hollow tube extending at least partially through a body of water and into an underwater ground, and wherein the hollow tube is at least partially filled with the liquid.
4. The wind turbine of any preceding clause, wherein the anchor structure comprises a floating platform or a buoy which is at least partially filled with the liquid and anchored to an underwater ground.
5. The wind turbine of any preceding clause, wherein the heat exchanger is configured to directly exchange a heat between an inner cooling cycle of the at least one unit and the liquid.
6. The wind turbine of any preceding clause, wherein the wind turbine further comprises a primary heat exchanger configured to directly cool the at least one unit, and wherein the primary heat exchanger is coupled to the heat exchanger through a common cooling cycle.
7. The wind turbine of any preceding clause, wherein the heat exchanger is a liquid-to-liquid heat exchanger or an air-to-liquid heat exchanger.
8. The wind turbine of any preceding clause, wherein the liquid comprises seawater and/or fresh water.
9. The wind turbine of any preceding clause, wherein the liquid is thermally coupled through an outer wall of the anchor structure with adjoining water.
10. The wind turbine of any preceding clause, wherein the volume of the liquid in the anchor structure is larger than about 5 m³.
11. The wind turbine of any preceding clause, further comprising at least one of a pump configured to pump the liquid through the heat exchanger, and a filter configured to remove debris from the liquid.
12. The wind turbine of any preceding clause, wherein the at least one unit to be cooled is a gearbox, a generator, an inverter or a transformer.
13. An offshore wind turbine, comprising:
   a foundation comprising a pile mounted in an underwater ground, the pile comprising a portion above the underwater ground which is at least partially filled with a coolant;
   at least one heat generating unit arranged above the pile; and
   a cooling system configured to cool the at least one heat generating unit utilizing the coolant.
14. The offshore wind turbine of any preceding clause, wherein the foundation is a mono pile foundation.
15. The offshore wind turbine of any preceding clause, wherein the cooling system comprises a heat exchanger which is configured to directly exchange an excess heat between an inner cooling cycle of the at least one heat generating unit and the coolant.
16. The offshore wind turbine of any preceding clause, wherein the cooling system comprises a primary heat exchanger and a secondary heat exchanger coupled to the primary heat exchanger and utilizing the coolant, the primary heat exchanger being configured to directly cool the at least one heat generating unit.
17. The offshore wind turbine of any preceding clause, wherein the cooling system is configured to distribute a major portion of an excess heat of the at least one heat generating unit through an outer wall of the pile by heat conduction.
18. The offshore wind turbine of any preceding clause, further comprising at least one of a gearbox, a generator, and an inverter, and wherein the cooling system is configured to cool at least one of the gearbox, the generator, and the inverter.
19. An offshore wind turbine, comprising:
   a floating unit anchored to an underwater ground, the floating unit being partially filled with a coolant;
   at least one heat generating unit arranged above the floating unit; and,
   a cooling system configured to cool the at least one heat generating unit utilizing the coolant.
20. The offshore wind turbine of any preceding clause, wherein the floating unit is a floating platform or a buoy.

## Claims

1. A wind turbine (210, 310, 410, 510), comprising:
at least one unit to be cooled (21, 42, 46);
a tower (12, 121);
an anchor structure (70, 78, 79) arranged at a lower end of the tower, the anchor structure being at least partially filled with a liquid (30); and
a heat exchanger (51, 52) configured to cool the at least one unit using the liquid (71) as a coolant.

2. The wind turbine of claim 1, wherein the anchor structure comprises a hollow tube (70) extending at least partially through a body of water (90) and into an underwater ground (80), and wherein the hollow tube (70) is at least partially filled with the liquid (30).

3. The wind turbine of any preceding claim, wherein the anchor structure comprises a floating platform (78) or a buoy (79) which is at least partially filled with the liquid and anchored to an underwater ground (85).

4. The wind turbine of any preceding claim, wherein the heat exchanger (51) is configured to directly exchange a heat between an inner cooling cycle of the at least one unit and the liquid.

5. The wind turbine of any preceding claim, wherein the wind turbine further comprises a primary heat exchanger (51) configured to directly cool the at least one unit, and wherein the primary heat exchanger (51) is coupled to the heat exchanger (52) through a common cooling cycle.

6. The wind turbine of any preceding claim, wherein the heat exchanger (51, 52) is a liquid-to-liquid heat exchanger or an air-to-liquid heat exchanger.

7. The wind turbine of any preceding claim, wherein the liquid (30) comprises seawater and/or fresh water.

8. The wind turbine of any preceding claim, wherein the liquid (30) is thermally coupled through an outer wall (75) of the anchor structure (70, 78, 79) with adjoining water (90).

9. The wind turbine of any preceding claim, further comprising at least one of a pump configured to pump the liquid through the heat exchanger, and a filter (65) configured to remove debris from the liquid (30).

10. The wind turbine of any preceding claim, wherein the at least one unit to be cooled is a gearbox (46), a generator (42), an inverter or a transformer.
